# EUROPÄISCHE PATENTSCHRIFT

(11) **EP 1 365 398 B1**
(45) Veröffentlichungstag und Bekanntmachung des Hinweises auf die Patenterteilung: **14.05.2008**
(21) Anmeldenummer: 03011211.4
(22) Anmeldetag: 16.05.2003
(51) Int. Cl.: G11B 19/12, G11B 19/02, G11B 27/10

(54) **Wahleinrichtung für Lese- und/oder Schreibeinrichtungen für beschreibbare Digital Versatile Disk (DVD)**
Selecting device for reading and/or writing apparatus for writable Digital Versatile Disk (DVD)
Dispositif de séléction pour appareil de lecture et/ou écriture pour Digital Versatile Disk (DVD) inscriptible

(30) Priorität: 17.05.2002 DE 10223080
(43) Veröffentlichungstag der Anmeldung: 26.11.2003
(73) Patentinhaber: Nero AG, 76307 Karlsbad (DE)
(72) Erfinder: Weickert, Roland, 76297 Stutensee (DE); Kopf, Rainer, 75334 Straubenhardt (DE)
(74) Vertreter: Zimmermann, Tankred Klaus

(56) Entgegenhaltungen:
- EP-A- 0 724 263
- EP-A- 1 113 442
- EP-A- 1 178 470
- US-A- 5 825 726
- PATENT ABSTRACTS OF JAPAN Bd. 1998, Nr. 10, 31. August 1998 (1998-08-31) & JP 10 134483 A (FUJITSU TEN LTD), 22. Mai 1998 (1998-05-22)

## Beschreibung

Die Erfindung betrifft Wahleinrichtungen für Lese- und/oder Schreibeinrichtungen für beschreibbare Digital Versatile Disk (DVD), die mit Datenverarbeitungseinrichtungen mit wenigstens einem Betriebssystem verbunden sind, welches nur auf einen festen durch Lead-In und Lead-Out begrenzten sich auch nicht wechselnden Bereich mit Daten zugreifen kann.

Bekannte Lese- und/oder Schreibeinrichtungen für beschreibbare Digital Versatile Disk (DVD) - nachfolgend nur noch DVD genannt - zeichnen sich insbesondere dadurch aus, dass mit einem Betriebssystem in einer Datenverarbeitungseinrichtung nur durch Lead-In und Lead-Out begrenzte Datenbereiche lesbar sind. Ein Weiterschreiben nach dem Lead-Out ist nicht möglich. Jeder abgeschlossene Datenbereich erfordert damit eine DVD. Insbesondere bei Datenbereichen mit kleinen Datenmengen ist das wenig effektiv. Die volle Kapazität einer beschreibbaren DVD kann dabei nicht ausgenutzt werden. Ein nicht beschriebener Bereich nach dem Lead-Out kann nicht genutzt werden.

Die EP-A-1113442 offenbart ein Verfahren für eine Menü-getriebene Steuerung eines extern verbundenen Geräts in einer Audio/Video-Vorrichtung. Ansprechend auf eine Benutzeranfrage nach einem Menübild für das externe Gerät wird ein Menübild auf einer Anzeige der digitalen Audio/Video-Vorrichtung angezeigt. Das Menübild umfasst Menügegenstände, die Operationen des externen Geräts zugeordnet sind, und Menügegenstände, die der Anfrage nach einem Bild des detaillierten Menüs des externen Geräts zugeordnet sind. Wenn ein Menügegenstand für Operationen des externen Geräts ausgewählt ist, wird ein Befehl an das externe Gerät übertragen, damit das externe Gerät die entsprechende Operation durchführt.

Die EP-A-1 178 470 offenbart ein Verfahren und eine Vorrichtung für ein Informationsaufzeichnungsmedium. Einmal beschreibbare, jedoch oft auslesbare Disks haben ein Verzeichnis für ein Dateimanagement in jeder Session, wobei Dateien, die in anderen Sessions existieren, in diesem Verzeichnis verwaltet werden können. Um diesen Vorteil auch für Musik-CDs zu erreichen, werden Inhaltsverzeichnisse in Lead-In-Bereichen der mehreren Sessions aufgezeichnet. Insbesondere sind Informationen zum Verwalten von Musikstücken, die in einer Session aufgezeichnet worden sind, in einem Inhaltsverzeichnis dieser Session registriert. Gleichzeitig sind jedoch auch Informationen zum Verwalten von Stücken, die in anderen Sessions aufgezeichnet sind, ebenfalls in diesem Inhaltsverzeichnis enthalten.

Der im Patentanspruch 1 angegebenen Erfindung liegt das Problem zugrunde, beschreibbare Digital Versatile Disk (DVD) nach einem Lead-In auch bereichsweise mit einem Betriebssystem zu lesen. Dieses Problem wird mit den im Patentanspruch 1 aufgeführten Merkmalen gelöst.

Die Wahleinrichtungen für Lese- und/oder Schreibeinrichtungen für beschreibbare Digital Versatile Disk (DVD) - nachfolgend nur noch DVD genannt - zeichnen sich insbesondere dadurch aus, dass mit Betriebssystemen in Datenverarbeitungseinrichtungen, über welche ansonsten nur durch Lead-In und Lead-Out begrenzte Datenbereiche lesbar sind, nach dem Lead-In begrenzte Datenbereiche wahlfrei gelesen und/oder weiterbeschrieben werden können.

Der Benutzer kann dadurch wahlfrei auf verschiedene Datenbereiche zugreifen, die der Benutzer vorher der Wahleinrichtung mitgeteilt hat. Das beseitigt den Nachteil, dass das Betriebssystem nur auf einen festen meistens den ersten oder den letzten Datenbereich zugreifen kann.

Beschreibbare DVDs werden in der Regel dazu verwendet, große Datenmengen oder Audio/Video Material darauf zu speichern und wiederzugeben. Bei dieser Verwendung werden DVDs einmal beschrieben und keine weiteren Daten hinzugefügt. Auf einer DVD befindet sich im Gegensatz zur Compact Disk (CD) nur ein Lead-In und ein Lead-Out. Sobald der Lead-Out geschrieben wurde ist die DVD abgeschlossen und es können keine weiteren Daten (Sessions) angefügt werden.
Bei heutigen DVD-Rekordern gibt es aber auch die Möglichkeit, wie bei CD-R/RW nach einem erfolgten abgeschlossenen Schreibvorgang (Session mit medienspezifischen Begrenzungen der Session) auf eine DVD recordable weitere Daten zu einem späteren Zeitpunkt hinzuzufügen. Die so erzeugte DVD enthält also mehrere mit medienspezifischen Begrenzungen versehene Sessions (Multisession), die für sich genommen die Benutzerdaten und die Verwaltungsinformation für die Benutzerdaten (Dateisystem) enthalten.
Ein wahlfreier Zugriff auf die so erzeugten DVD Sessions mit den medienspezifischen Begrenzungen wird von verschiedenen Betriebssystemen nicht unterstützt. So wird bei einigen Betriebssystemen beim Einlegen einer sogenannten Multisession DVD nur die erste Session angezeigt, dass heißt auf später hinzugefügte Daten kann nicht zugegriffen werden, lediglich auf die Daten welche beim allererstenmal auf die DVD recordable beschrieben wurden. Andere Betriebssysteme hingegen zeigen immer nur die letzte Session an, lassen aber auch keinen wahlfreien Zugriff zu.

Mit der erfindungsgemäßen Wahleinrichtung wird dieser Nachteil vorteilhafterweise behoben, wobei es möglich ist, auf jede Session einer sogenannten Multisession DVD wahlfrei zugreifen zu können, um damit an alle Daten auf der DVD zu gelangen. Dabei wird auch die spezielle Struktur der verschiedenen DVD recordable Typen berücksichtigt (DVD+R/RW, DVD-R/RW). Die erfindungsgemäße Wahleinrichtung für Lese- und/oder Schreibeinrichtungen für beschreibbare Digital Versatile Disk (DVD) ist dementsprechend für Datenverarbeitungseinrichtungen mit wenigstens einem Betriebssystem geeignet, wobei die Datenverarbeitungseinrichtung mit dem Betriebssystem nur auf einen festen durch Lead-In und Lead-Out begrenzten, sich auch nicht wechselnden Bereich mit Daten zugreifen kann.

Dazu wird in einer ersten Einrichtung ein gekennzeichneter, vollständiger und begrenzter Datenbereich nach dem Lead-In vorhandener und begrenzter Datenbereiche der DVD wahlfrei während des Betriebes der DVD selektiert und in einer zweiten Einrichtung dieser während des Betriebes der DVD wahlfrei ausgesuchte und begrenzte Datenbereich als der erste oder der einzige Datenbereich für das Betriebssystem dargestellt. Das ist für beschreibbare DVD von besonderer Bedeutung, die zeitlich unterbrochen nacheinander mit begrenzten Datenbereichen bis zum Abschluss der DVD beschrieben werden. Der Abschluss erfolgt mit dem Lead-Out. Neue Datenbereiche einer noch nicht vollständig beschriebenen DVD werden nach dem letzten Datenbereich angehangen, wobei vorteilhafterweise bereits beschriebene Datenbereiche einzeln abgefragt und gelesen werden können, auch unabhängig des Abschlusses durch Lead-Out.

Ein weiterer wesentlicher Vorteil besteht für den Benutzer darin, dass die volle Kapazität einer beschreibbaren DVD ausgenutzt werden kann, ohne dass während eines einzigen Schreibvorganges die komplette DVD beschrieben werden muss. Ansonsten wäre der nicht beschriebene Bereich nicht nutzbar, da nicht lesenderweise zugreifbar, selbst wenn dieser in einem weiteren Schreibvorgang beschrieben wird. Selbst das Übertragen des kompletten Inhalts der DVD auf die Datenverarbeitungseinrichtung, z.B. einer Festplatte, würde das Problem nicht lösen.

Vorteilhafte Ausgestaltungen der Erfindung sind in den Patentansprüchen 2 bis 8 angegeben.

Eine erste Einrichtung, die einen durch Border-In/Border-Out gekennzeichneten, vollständigen und begrenzten Datenbereich nach dem Lead-In vorhandener Datenbereiche der DVD wahlfrei während des Betriebes der DVD selektiert und eine zweite Einrichtung, die diesen während des Betriebes der DVD wahlfrei ausgesuchten durch Border-In/Border-Out begrenzten Datenbereich als den ersten oder den einzigen Datenbereich für das Betriebssystem darstellt, nach der Weiterbildung des Patentanspruchs 2 führt dazu, dass die Wahleinrichtung für auch noch nicht durch Lead-Out abgeschlossene DVD-R's (R-Recordable) einsetzbar ist. Dabei können diese Datenbereiche unabhängig voneinander gelesen werden. Weitere neue Datenbereiche werden nach dem letzten Datenbereich angehangen bis das verfügbare Speichervolumen der DVD-R abgeschlossen ist.

Eine erste Einrichtung, die einen durch Border-In/Border-Out gekennzeichneten, vollständigen und begrenzten Datenbereich zwischen dem Lead-In und dem Lead-Out vorhandener und durch Border-In/Border-Out begrenzte Datenbereiche der DVD wahlfrei während des Betriebes der DVD selektiert und eine zweite Einrichtung, die diesen während des Betriebes der DVD wahlfrei ausgesuchten durch Border-In/Border-Out begrenzten Datenbereich als den ersten oder den einzigen Datenbereich für das Betriebssystem darstellt, nach der Weiterbildung des Patentanspruchs 3 führt zu der Lesbarkeit von einzelnen und durch den Benutzer frei wählbaren Datenbereichen einer durch Lead-In und Lead-Out begrenzten DVD-R. Dadurch wird verhindert, dass nur der erste oder der letzte Datenbereich als einziger Datenbereich durch das Betriebssystem erfassbar ist.

Eine erste Einrichtung, die einen durch Lead-In/Closure oder Intro/Closure gekennzeichneten, vollständigen und begrenzten Datenbereich nach dem Lead-In vorhandener begrenzte Datenbereiche der DVD wahlfrei während des Betriebes der DVD selektiert und eine zweite Einrichtung, die eine diesen während des Betriebes der DVD wahlfrei ausgesuchten durch Lead-In/Closure oder Intro/Closure begrenzten Datenbereich als den ersten oder den einzigen Datenbereich für das Betriebssystem darstellt, nach der Weiterbildung des Patentanspruchs 4 führt dazu, dass die Wahleinrichtung für auch noch nicht durch Lead-Out abgeschlossene DVD+R's einsetzbar ist. Neue Datenbereiche können an den letzten vorhandenen Datenbereich angehangen werden, bis das verfügbare Speichervolumen der DVD+R ausgeschöpft ist.

Eine erste Einrichtung, die einen durch Lead-In/Closure, Intro/Closure oder Intro/Lead-Out gekennzeichneten, vollständigen und begrenzten Datenbereich nach dem Lead-In vorhandener und begrenzter Datenbereiche der DVD wahlfrei während des Betriebes der DVD selektiert und eine zweite Einrichtung, die einen diesen während des Betriebes der DVD wahlfrei ausgesuchten durch Lead-In/Closure, Intro/Closure oder Intro/Lead-Out begrenzten Datenbereich als den ersten oder den einzigen Datenbereich für das Betriebssystem darstellt, nach der Weiterbildung des Patentanspruchs 5 führt zu einer Lesbarkeit von einzelnen und durch den Benutzer frei wählbaren Datenbereichen einer durch Lead-In und Lead-Out begrenzten DVD+R. Dadurch wird verhindert, dass nur der erste oder der letzte Datenbereich als einziger Datenbereich durch das Betriebssystem erfassbar ist.

Über die Umlegung der Startadresse des für das Betriebssystem einzigen auswählbaren Datenbereichs auf die Startadresse eines beliebigen und durch den Benutzer frei auswählbaren Datenbereich nach der Weiterbildung des Patentanspruchs 6 besteht für den Benutzer die Möglichkeit, die volle Kapazität einer beschreibbaren DVD auszunutzen, ohne dass während eines einzigen Schreibvorganges die komplette DVD beschrieben werden muss. Der nicht beschriebene Bereich wäre ansonsten nicht nutzbar, da lesenderweise nicht zugreifbar, selbst wenn er in einem weiteren Schreibvorgang beschrieben wird. Das Problem wird auch durch Übertragung des kompletten Inhalts der DVD auf z.B. eine Festplatte der Datenverarbeitungseinrichtung nicht gelöst. Das kann über entsprechende Darstellungen und einer Menüführung auf einem Datensichtgerät, zum Beispiel als Bildschirm, benutzerfreundlich erfolgen. Dadurch ist der Benutzer weiterhin in der Lage, auch einen gewünschten Datenbereich auf der DVD für eine Nutzung auszusuchen, ohne dass der Inhalt der gesamten DVD auf die Datenverarbeitungseinrichtung übertragen werden muss, so dass wesentlich weniger Speichervolumen benötigt wird.

Die Weiterbildungen der Patentansprüche 7 und 8 führen dazu, dass der Benutzer eine Möglichkeit erhält, die Datenbereiche der DVD zu bestimmen. Das wenigstens eine frei festlegbare Zeichen oder der frei wählbare Name führt vorteilhaft zu einem Inhaltsverzeichnis der auf der DVD vorhandenen Datenbereiche. Gleichzeitig ergibt sich für den Benutzer die Möglichkeit, nicht vollständige DVD leicht und schnell wiederzufinden, indem der Benutzer nur das Inhaltsverzeichnis nicht den Inhalt der bereits vorhandenen Datenbereiche aufrufen muss.

Ein Ausführungsbeispiel der Erfindung wird im folgenden näher beschrieben.

Eine Wahleinrichtung für Lese- und/oder Schreibeinrichtungen für beschreibbare DVD, die mit Datenverarbeitungseinrichtungen mit wenigstens einem Betriebssystem verbunden sind, welches nur auf einen festen durch Lead-In und Lead-Out begrenzten sich auch nicht wechselnden Bereich mit Daten zugreifen kann, besteht im Wesentlichen aus einer ersten Einrichtung, die einen gekennzeichneten, vollständigen und begrenzten Datenbereich nach dem Lead-In vorhandener und begrenzter Datenbereiche der DVD wahlfrei während des Betriebes der DVD selektiert, und einer zweiten Einrichtung, die diesen während des Betriebes der DVD wahlfrei ausgesuchten und begrenzten Datenbereich als den ersten oder den einzigen Datenbereich für das Betriebssystem darstellt. Die Einrichtungen sind Bestandteile eines Schreib- und/oder Lesegerätes für beschreibbare DVD. Beschreibbare DVD's sind dabei sowohl DVD-R als auch DVD+R (mit R für Recordable).

Bei einer DVD-R ist der Datenbereich ein Bestandteil eines sogenannten "Border". Ein Border enthält mindestens einen Border-In, den Datenbereich mit den Benutzerdaten und einen Border-Out. Nach dem letzten Border-Out enthält die abgeschlossene DVD-R zusätzlich noch einen Lead-Out. Eine DVD-R wird als "abgeschlossen" bezeichnet, sobald sie einen Lead-Out enthält.
Noch nicht abgeschlossene DVD-R, wobei noch weitere Daten als weitere Datenbereiche geschrieben werden können, besitzt die folgende Struktur:
Lead-In / Border-In / Datenbereich 1 / Border-Out / Border-In / Datenbereich 2 /Border-Out /... / Border-In / Datenbereich n / Border-Out.
Eine abgeschlossene DVD-R, wobei keine weiteren Daten geschrieben werden können, weist die folgende Struktur auf: Lead-In / Border-In / Datenbereich 1 /Border-Out / Border-In / Datenbereich 2 / Border-Out / ... / Border-In / Datenbereich n / Border-Out / Lead-Out.
Die erste Einrichtung selektiert einen durch Border-In/Border-Out gekennzeichneten, vollständigen und begrenzten Datenbereich nach dem Lead-In vorhandener Datenbereiche der DVD-R wahlfrei während des Betriebes der DVD-R. Die zweite Einrichtung stellt diesen während des Betriebes der DVD wahlfrei ausgesuchten durch Border-In/Border-Out begrenzten Datenbereich als den ersten oder den einzigen Datenbereich einer nicht abgeschlossenen oder einer durch Lead-Out abgeschlossenen DVD-R für das Betriebssystem dar.

Bei einer DVD+R ist der Datenbereich ein Bestandteil einer sogenannten "Session". Eine Session enthält mindestens für die erste Session einen Lead-In, für die zweite und die folgenden Sessionen ein Intro, den Datenbereich mit den Benutzerdaten, für die Sessionen n-1 einen Closure und für die letzte Session einen Lead-Out, in einer Anwendungsform auch mit einem Closure. Eine abgeschlossene DVD+R enthält einen Lead-Out.
Noch nicht abgeschlossene DVD+R, wobei noch weitere Daten als Datenbereich geschrieben werden können, besitzt die folgende Struktur:
Lead-In / Datenbereich 1 / Closure / Intro / Datenbereich 2 / Closure / ... / Intro /Datenbereich n / Closure.
Eine abgeschlossene DVD+R, wobei keine weiteren Daten geschrieben werden können, weist die folgende Struktur auf: Lead-In / Datenbereich 1 / Closure / Intro /Datenbereich 2 / Closure / ... / Intro / Datenbereich n / (Closure - nicht zwingend) /Lead-Out.

Die erste Einrichtung selektiert einen durch Lead-In/Closure oder Intro/Closure gekennzeichneten, vollständigen und begrenzten Datenbereich nach dem Lead-In vorhandener begrenzter Datenbereiche der DVD+R wahlfrei während des Betriebes der DVD+R. Die zweite Einrichtung stellt diesen während des Betriebes der DVD+R wahlfrei ausgesuchten zum Einen durch Lead-In/Closure oder Intro/Closure oder zum Anderen Lead-In/Closure, Intro/Closure oder Intro/Lead-Out begrenzten Datenbereich als den ersten oder den einzigen Datenbereich für das Betriebssystem dar.

Sowohl bei der DVD-R als auch bei der DVD+R legt die zweite Einrichtung eine für das Betriebssystem die Startadresse des für das Betriebssystem einzigen auswählbaren Datenbereichs auf die Startadresse eines beliebigen auswählbaren Datenbereich um, wobei dem Betriebssystem vorgegeben wird, auf den einzigen Datenbereich zuzugreifen, aber wobei die Anfrage auf den ausgewählten Datenbereich umgeleitet wird.

In einer weiteren Ausführungsform des Ausführungsbeispiels schreibt eine dritte Einrichtung wenigstens ein Zeichen oder einen aus mehreren Zeichen bestehenden Namen für jeweils einen begrenzten Datenbereich in den Lead-In oder dem Lead-Out in Form eines Inhaltsverzeichnisses ein. Die dritte Einrichtung ist ein Bestandteil der Wahleinrichtung.

## Patentansprüche

1. Wahleinrichtung für eine Lese- und/oder Schreibeinrichtung für eine beschreibbare Digital Versatile Disk (DVD), wobei die Digital Versatile Disk eine Mehrzahl von nach einem Lead-In-Bereich vorhandenen und begrenzten Datenbereichen aufweist,
wobei die Wahleinrichtung mit mindestens einer Datenverarbeitungseinrichtung, die wenigstens ein Betriebssystemaufweist, verbindbar ist, wobei das Betriebssystem der Datenverarbeitungseinrichtung ausgebildet ist, um nur auf einen festen ersten oder einzigen Datenbereich der Mehrzahl von Datenbereichen, der nach dem Lead-In-Bereich vorhanden ist und begrenzt ist, zuzugreifen, mit folgenden Merkmalen:
einer ersten Einrichtung zum wahlfreien Selektieren eines **gekennzeichnet**en, vollständigen und begrenzten Datenbereich der Mehrzahl von nach dem Lead-In-Bereich vorhandenen und begrenzten Datenbereiche der Digital Versatile Disk (DVD) während des Betriebes der Digital Versatile Disk (DVD); und
einer zweiten Einrichtung zum Darstellen des Datenbereichs, der durch die erste Einrichtung selektiert worden ist, als den ersten oder den einzigen Datenbereich für das Betriebssystem
wobei die erste Einrichtung und die zweite Einrichtung miteinander verbunden sind.

2. Wahleinrichtung nach Patentanspruch 1,
bei der ein nach dem Lead-In-Bereich vorhandener Datenbereich einerseits durch einen Border-In-Bereich und andererseits durch einen Border-Out-Bereich begrenzt ist, und
bei der die zweite Einrichtung ausgebildet ist, um den selektierten durch den Border-In- und Border-Out-Bereich begrenzten Datenbereich als den ersten oder den einzigen Datenbereich für das Betriebssystem darzustellen.

3. Wahleinrichtung nach Patentanspruch 1 oder 2, bei der ein durch einen Border-In Bereich und einen Border-Out-Bereich **gekennzeichnet**er, vollständiger und begrenzter Datenbereich zwischen dem Lead-In-Bereich und einem Lead-Out-Bereich vorhanden ist , und
bei der die zweite Einrichtung ausgebildet ist, um den selektierten durch den Border-In-Bereich und den Border-Out-Bereich begrenzten Datenbereich als den ersten oder den einzigen Datenbereich für das Betriebssystem darzustellen.

4. Wahleinrichtung nach Patentanspruch 1, bei der eine Mehrzahl von durch Lead-In/Closure-Bereiche oder Intro/Closure-Bereiche **gekennzeichnet**e, vollständige und begrenzte Datenbereiche nach dem Lead-In-Bereich vorhandensind,
wobei die zweite Einrichtung ausgebildet ist, um einen selektierten durch Lead-In/Closure-Bereiche oder Intro/Closure-Bereiche begrenzten Datenbereich als den ersten oder den einzigen Datenbereich für das Betriebssystem darzustellen.

5. Wahleinrichtung nach Patentanspruch 1, bei der eine Mehrzahl von durch Lead-In/Closure-Bereiche, Intro/Closure-Bereiche oder Intro/Lead-Out-Bereiche **gekennzeichnet**e, vollständige und begrenzte Datenbereiche nach dem Lead-In-Bereich vorhanden sind, und
bei der die zweite Einrichtung ausgebildet ist, um einen selektierten durch Lead-In/Closure-Bereiche, Intro/Closure-Bereiche oder lntro/Lead-Out-Bereiche begrenzten Datenbereich als den ersten oder den einzigen Datenbereich für das Betriebssystem darzustellen.

6. Wahleinrichtung nach Patentanspruch 1, bei der die zweite Einrichtung ausgebildet ist, um eine Startadresse eines für das Betriebssystem ersten oder einzigen auswählbaren Datenbereichs auf eine Startadresse des selektierten Datenbereichs umzulegen, so dass dem Betriebssystem vorgegeben wird, dass es auf den ersten oder einzigen Datenbereich zugreift, dass jedoch eine Anfrage auf den selektierten Datenbereich umgeleitet wird.

7. Wahleinrichtung nach Patentanspruch 1, die ferner folgendes Merkmal aufweist:
eine dritte Einrichtung zum Einschreiben wenigstens eines Zeichens für jeweils einen begrenzten Datenbereich in den Lead-In-Bereich oder einen Lead-Out-Bereich,
wobei die dritte Einrichtung für das Betriebssystem erkennbar ist.

8. Wahleinrichtung nach Patentanspruch 7, bei der die dritte Einrichtung ausgebildet ist, um dem Zeichen für jeweils einen der begrenzten Datenbereiche in dem Lead-In-Bereich oder dem Lead-Out-Bereich einen frei wählbaren Namen zuzuordnen.

9. Wahlverfahren für eine Lese- und/oder Schreibeinrichtung für eine beschreibbare Digital Versatile Disk (DVD), wobei die Digital Versatile Disk eine Mehrzahl von nach einem Lead-In-Bereich vorhandenen und begrenzten Datenbereichen aufweist,
wobei das Wahlverfahren in Verbindung mit mindestens einer Datenverarbeitungseinrichtung, die wenigstens ein Betriebssystem aufweist, ausführbar ist, wobei das Betriebssystem der Datenverarbeitungsrichtung ausgebildet ist, um nur auf einen festen ersten oder einzigen Datenbereich der Mehrzahl von Datenbereichen, der nach einem Lead-In vorhanden ist und begrenzt ist, zuzugreifen, mit folgenden Schritten:
wahlfreies Selektieren eines **gekennzeichnet**en, vollständigen und begrenzten Datenbereich der Mehrzahl von nach dem Lead-In-Bereich vorhandenen und begrenzten Datenbereiche der Digital Versatile Disk (DVD) während des Betriebes der Digital Versatile Disk (DVD); und
Darstellen des Datenbereichs, der im Schritt des wahlfreien Selektierens selektiert worden ist, als den ersten oder den einzigen Datenbereich für das Betriebssystem.

10. Verfahren zum Zugreifen auf eine beschreibbare Digital Versatile Disk (DVD),
wobei die Digital Versatile Disk eine Mehrzahl von nach einem Lead-In-Bereich vorhandenen und begrenzten Datenbereichen aufweist, wobei das Verfahren mit mindestens einer Datenverarbeitungseinrichtung, die wenigstens ein Betriebssystem aufweist, durchführbar ist, wobei das Betriebssystem der Datenverarbeitungsrichtung ausgebildet ist, um nur auf einen festen ersten oder einzigen Datenbereich der Mehrzahl von Datenbereichen, der nach dem Lead-In-Bereich vorhanden ist und begrenzt ist, zuzugreifen, mit folgenden Schritten:
Empfangen einer Benutzermitteilung, dass der Benutzer auf einen Datenbereich der Mehrzahl von begrenzten Datenbereichen zugreifen möchte;
Darstellen des von dem Benutzer identifizierten Datenbereichs als den ersten oder den einzigen Datenbereich für das Betriebssystem; und
Umleiten einer Anfrage des Betriebssystems nach dem ersten oder dem einzigen Datenbereich auf den von dem Benutzer identifizierten Datenbereich, so dass auf den von dem Benutzer identifizierten Datenbereich zugegriffen wird, obgleich dem Betriebssystem vorgegeben wird, dass es auf den ersten oder den einzigen Datenbereich zugreift.

11. Verfahren nach Anspruch 10, bei dem im Schritt des Darstellens eine Startadresse des ersten oder des einzigen Datenbereichs, der durch das Betriebssystem auswählbar ist, in eine Startadresse des von dem Benutzer identifizierten Datenbereichs umgelegt wird.

12. Vorrichtung zum Zugreifen auf eine beschreibbare Digital Versatile Disk (DVD),
wobei die Digital Versatile Disk eine Mehrzahl von nach einem Lead-In-Bereich vorhandenen und begrenzten Datenbereichen aufweist, wobei die Vorrichtung mit mindestens einer Datenverarbeitungseinrichtung, die wenigstens ein Betriebssystem aufweist, verbindbar ist, wobei das Betriebssystem der Datenverarbeitungsrichtung ausgebildet ist, um nur auf einen festen ersten oder einzigen Datenbereich der Mehrzahl von Datenbereichen, der nach dem Lead-In-Bereich vorhanden ist und begrenzt ist, zuzugreifen, mit folgenden Merkmalen:
einer Einrichtung zum Empfangen einer Benutzermitteilung, dass der Benutzer auf einen Datenbereich der Mehrzahl von begrenzten Datenbereichen zugreifen möchte;
einer Einrichtung zum Darstellen des von dem Benutzer identifizierten Datenbereichs als den ersten oder den einzigen Datenbereich für das Betriebssystem; und
einer Einrichtung zum Umleiten einer Anfrage des Betriebssystems nach dem ersten oder dem einzigen Datenbereich auf den von dem Benutzer identifizierten Datenbereich, so dass auf den von dem Benutzer identifizierten Datenbereich zugegriffen wird, obgleich dem Betriebssystem vorgegeben wird, dass es auf den ersten oder den einzigen Datenbereich zugreift.

13. Computerprogramm mit einem Programmcode zum Durchführen des Verfahrens nach Anspruch 9 oder 10, wenn das Programm auf einem Computer abläuft.

## Claims

1. Selection means for reading and/or recording means for an inscribable Digital Versatile Disk (DVD), wherein the Digital Versatile Disk has a plurality of limited data areas which are present after a lead-in area,
wherein the selection means is connectable to at least one data processing unit having at least one operating system, wherein the operating system of the data processing unit is operative to access only a limited fixed first or single data area of the plurality of data areas which is present after the Lead-In Area, comprising:
first means for freely selecting an identified, complete and limited data area of the plurality of limited data areas existing after the Lead-In Area of the Digital Versatile Disk (DVD), during an operation of the Digital Versatile Disk (DVD); and
second means for representing the data area selected by the first means as the first or the single data area for the operating system,
wherein the first means and the second means are connected to each other.

2. The selection means of claim 1,
in which a data area present after the Lead-In Area is limited, on the one hand, by a Border-In Area and, on the other hand, by a Border-Out-Area, and
in which the second means is operative to represent the selected data area limited by the Border-In Area and the Border-Out Area as the first or the single data area for the operating system.

3. The selection means of claim 1 or 2, in which a complete and limited data area identified by a Border-In Area and a Border-Out Area is present between the Lead-In Area and a Lead-Out Area, and
in which the second means is operative to represent the selected data area limited by the Border-In Area and the Border-Out Area as the first or the single data area for the operating system.

4. The selection means of claim 1, in which a plurality of complete and limited data areas identified by Lead-In/Closure-Areas or Intro/Closure Areas are present after the Lead-In Area, and
wherein the second means is operative to represent a selected data area limited by Lead-In/Closure-Areas or Intro/Closure-Areas as the first or the single data area for the operating system.

5. The selection means of claim 1, in which a plurality of complete and limited data areas identified by Lead-In/Closure Areas, Intro/Closure Areas or Intro/Lead-Out-Areas are present after the Lead-In Area, and
in which the second means is operative to represent a selected data area limited by Lead-In/Closure-Areas, Intro/Closure-Areas or Intro/Lead-Out-Areas as the first or the single data area for the operating system.

6. The selection means of claim 1, in which the second means is operative for transferring a start address of a first or single data area selectable for the operating system to a start address of the selected data area so that the operating system is said to access the first or single data area, but an enquiry is diverted to the selected data area.

7. The selection means of claim 1, further comprising:
third means for inscribing at least one character for each limited data area in the Lead-In Area or a Lead-Out Area, wherein the third means is detectable by the operating system.

8. The selection means of claim 7, in which the third means is operative to allocate a freely selectable name to a character for one of the limited data areas in the Lead-In Area or the Lead-Out Area.

9. A method of selecting for reading and/or recording means for an inscribable Digital Versatile Disk (DVD), wherein the Digital Versatile Disk has a plurality of limited data areas which are present after a lead-in area, wherein the method of selecting is performable in connection with at least one data processing unit having at least one operating system, wherein the operating system of the data processing unit is operative to access only a limited fixed first or single data area of the plurality of data areas which is present after the Lead-In Area, comprising:
freely selecting an identified, complete and limited data area of the plurality of limited data areas existing after the Lead-In Area of the Digital Versatile Disk (DVD), during an operation of the Digital Versatile Disk (DVD); and
representing the data area selected in the step of freely selecting as the first or the single data area for the operating system.

10. A method of accessing an inscribable Digital Versatile Disk (DVD), wherein the Digital Versatile Disk has a plurality of limited data areas which are present after a Lead-In Area, wherein the method is performable with at least one data processing unit having at least one operating system, wherein the operating system of the data processing unit is operative to access only a limited fixed first or single data area of the plurality of data areas which is present after the Lead-In Area, comprising:
receiving a user communication indicating that the user wishes to access a data area of the plurality of the limited data areas;
representing the data area identified by the user as the first or the single data area for the operating system; and
diverting an enquiry of the operating system for the first or the single data area to the data area identified by the user so that the data area identified by the user is accessed, although the operating system is said to access the first or the single data area.

11. The method of claim 10, in which, in the step of representing, a start address of the first or the single data area which is selectable by the operating system is transferred into a start address of the data area identified by the user.

12. An apparatus for accessing an inscribable Digital Versatile Disk (DVD), wherein the Digital Versatile Disk has a plurality of limited data areas which are present after a Lead-In Area, wherein the apparatus is connectable with at least one data processing unit having at least one operating system, wherein the operating system of the data processing unit is operative to access only a limited fixed first or single data area of the plurality of data areas which is present after the Lead-In Area, comprising:
means for receiving a user communication indicating that the user wishes to access a data area of the plurality of limited data areas;
means for representing the data area identified by the user as the first or the single data area for the operating system; and
means for diverting an enquiry of the operating system for the first or the single data area to the data area identified by the user so that the data area identified by the user is accessed, although the operating system is said to access the first or the single data area.

13. A computer program having a program code for performing the method of claim 9 or 10, when the program runs on a computer.

## Revendications

1. Dispositif de sélection pour appareil de lecture et/ou écriture pour Digital Versatile Disk (DVD) (= vidéo disque numérique) inscriptible, le Digital Versatile Disk présentant une pluralité de zones de données présentes et limitées après une zone d'entrée, le dispositif de sélection pouvant être relié à au moins un dispositif de traitement de données présentant au moins un système opérationnel, le système opérationnel du dispositif de traitement de données étant réalisé de manière à accéder uniquement à une première ou unique zone de données fixe de la pluralité de zones de données qui est présente et limitée après la zone d'entrée, aux caractéristiques suivantes:
un premier moyen destiné à sélectionner librement une zone de données **caractérisée**, complète et limitée de la pluralité de zones de données présentes et limitées après la zone d'entrée du Digital Versatile Disk (DVD) pendant le fonctionnement du Digital Versatile Disk (DVD); et
un deuxième moyen destiné à représenter la zone de données qui a été sélectionnée par le premier moyen comme la première ou l'unique zone de données pour le système opérationnel,
le premier moyen et le deuxième moyen étant reliés entre eux.

2. Dispositif de sélection selon la revendication 1,
dans lequel une zone de données présente après la zone d'entrée est limitée, d'une part, par une zone de 'border in' (= bordure intérieure) et, d'autre part, par une zone de 'border out' (= bordure extérieure), et
dans lequel le deuxième moyen est réalisé de manière à représenter la zone de données limitée par la zone de 'border in' et 'border out' sélectionnée comme la première ou l'unique zone de données pour le système opérationnel.

3. Dispositif de sélection selon la revendication 1 ou 2, dans lequel une zone de données **caractérisée**, complète et limitée par une zone de 'border in' et une zone de 'border out' est présente entre la zone d'entrée et une zone de sortie, et
dans lequel le deuxième moyen est réalisé de manière à représenter la zone de données limitée par la zone de 'border in' et la zone de 'border out' sélectionnée comme la première ou l'unique zone de données pour le système opérationnel.

4. Dispositif de sélection selon la revendication 1, dans lequel une pluralité de zones de données **caractérisées**, complètes et limitées par des zones d'entrée/fermeture ou des zones d'intro/fermeture sont présentes après la zone d'entrée,
le deuxième moyen étant réalisé de manière à représenter une zone de données limitée par des zones d'entrée/fermeture ou des zones d'intro/fermeture sélectionnée comme la première ou l'unique zone de données pour le système opérationnel.

5. Dispositif de sélection selon la revendication 1, dans lequel une pluralité de zones de données **caractérisées**, complètes et limitées par des zones d'entrée/fermeture, des zones d'intro/fermeture ou des zones d'intro/sortie sont présentes après la zone d'entrée, et
dans lequel le deuxième moyen est réalisé de manière à représenter une zone de données limitée par des zones d'entrée/fermeture, des zones d'intro/fermeture ou des zones d'intro/sortie sélectionnée comme la première ou l'unique zone de données pour le système opérationnel.

6. Dispositif de sélection selon la revendication 1, dans lequel le deuxième moyen est réalisé de manière à déplacer une adresse de début d'une première ou unique zone de données pouvant être sélectionnée pour le système opérationnel à une adresse de début de la zone de données sélectionnée, de sorte qu'il soit prédéterminé pour le système opérationnel qu'il accède à la première ou l'unique zone de données, mais qu'une demande soit toutefois déviée vers la zone de données sélectionnée.

7. Dispositif de sélection selon la revendication 1, présentant par ailleurs la caractéristique suivante:
un troisième moyen destiné à inscrire au moins un signe pour chaque fois une zone de données limitée dans la zone d'entrée ou une zone de sortie, le troisième moyen étant identifiable pour le système opérationnel.

8. Dispositif de sélection selon la revendication 7, dans lequel le troisième moyen est réalisé de manière à associer au signe pour chaque fois l'une des zones de données limitées dans la zone d'entrée ou la zone de sortie un nom pouvant être sélectionné librement.

9. Procédé de sélection pour appareil de lecture et/ou écriture pour Digital Versatile Disk (DVD) (= vidéo disque numérique) inscriptible, le Digital Versatile Disk présentant une pluralité de zones de données présentes et limitées après une zone d'entrée, le procédé de sélection pouvant être réalisé en liaison avec au moins un dispositif de traitement de données présentant au moins un système opérationnel, le système opérationnel du dispositif de traitement de données étant réalisé de manière à accéder uniquement à une première ou unique zone de données fixe de la pluralité de zones de données qui est présente et limitée après une entrée, aux étapes suivantes consistant à:
sélectionner librement une zone de données **caractérisée**, complète et limitée de la pluralité de zones de données présentes et limitées après la zone d'entrée du Digital Versatile Disk (DVD) pendant le fonctionnement du Digital Versatile Disk (DVD); et
représenter la zone de données qui a été sélectionnée à l'étape de sélection libre comme la première ou l'unique zone de données pour le système opérationnel.

10. Procédé pour accéder à un Digital Versatile Disk (DVD) inscriptible, le Digital Versatile Disk présentant une pluralité de zones de données présentes et limitées après une zone d'entrée, le procédé pouvant être réalisé avec au moins un dispositif de traitement de données présentant au moins un système opérationnel, le système opérationnel du dispositif de traitement de données étant réalisé de manière à accéder uniquement à une première ou unique zone de données fixe de la pluralité de zones de données qui est présente et limitée après une zone d'entrée, aux étapes suivantes consistant à:
recevoir une communication d'utilisateur que l'utilisateur aimerait accéder à une zone de données de la pluralité de zones de données limitées;
représenter la zone de données identifiée par l'utilisateur comme la première ou l'unique zone de données pour le système opérationnel; et
dévier une demande du système opérationnel après la première ou l'unique zone de données à la zone de données identifiée par l'utilisateur, de sorte qu'il soit accédé à la zone de données identifiée par l'utilisateur, bien qu'il soit prédéterminé pour le système opérationnel qu'il accède à la première ou l'unique zone de données.

11. Procédé selon la revendication 10, dans lequel, à l'étape de représentation, une adresse de début de la première ou l'unique zone de données pouvant être sélectionnée par le système opérationnel est déplacée à une adresse de début de la zone de données identifiée par l'utilisateur.

12. Dispositif pour accéder à un Digital Versatile Disk (DVD) inscriptible, le Digital Versatile Disk présentant une pluralité de zones de données présentes et limitées après une zone d'entrée, le dispositif pouvant être relié à au moins un dispositif de traitement de données présentant au moins un système opérationnel, le système opérationnel du dispositif de traitement de données étant réalisé de manière à accéder uniquement à une première ou unique zone de données fixe de la pluralité de zones de données qui est présente et limitée après la zone d'entrée, aux caractéristiques suivantes:
un moyen destiné à recevoir une communication d'utilisateur que l'utilisateur aimerait accéder à une zone de données de la pluralité de zones de données limitées;
un moyen destiné à représenter la zone de données identifiée par l'utilisateur comme la première ou l'unique zone de données pour le système opérationnel; et
un moyen destiné à dévier une demande du système opérationnel après la première ou l'unique zone de données à la zone de données identifiée par l'utilisateur, de sorte qu'il soit accédé à la zone de données identifiée par l'utilisateur, bien qu'il soit prédéterminé pour le système opérationnel qu'il accède à la première ou l'unique zone de données.

13. Programme d'ordinateur avec un code de programme pour réaliser le procédé selon la revendication 9 ou 10 lorsque le programme est exécuté sur un ordinateur.
